Europäisches Patentamt

European Patent Office

Office européen des brevets

(11) Veröffentlichungsnummer: **0 384 478**
**A2**

## (12) EUROPÄISCHE PATENTANMELDUNG

(21) Anmeldenummer: **90103507.1**

(22) Anmeldetag: **23.02.90**

(51) Int. Cl.5: **H04L 9/06**

Ein Antrag gemäss Regel 88 EPÜ auf Berichtigung der Beschreibung und Zeichnung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **24.02.89 DE 3905667**

(43) Veröffentlichungstag der Anmeldung:
**29.08.90 Patentblatt 90/35**

(84) Benannte Vertragsstaaten:
**AT CH FR GB IT LI NL**

(71) Anmelder: **ANT Nachrichtentechnik GmbH**
**Gerberstrasse 33**
**D-7150 Backnang(DE)**

(72) Erfinder: **Bitzer, Wolfgang, Dipl.-Ing.**
**Rechbergstrasse 15**
**D-7153 Weissach im Tal(DE)**

(54) **Verfahren zum Ver- und Entschlüsseln eines Nachrichtenstromes.**

(57) Verfahren zum Verschlüsseln bzw. Entschlüsseln eines Nachrichtenstromes mit Schlüsselgenerator, wobei jeder Block zweimalig ganzblockweise verschlüsselt wird, bei der zweiten Verschlüsselung aber in umgekehrter Reihenfolge als bei der ersten. Zwei Datenblöcke, die sich beispielsweise nur in einem einzigen Bit unterscheiden, werden dadurch zu garantiert total unterschiedlichen Chiffraten verschlüsselt. Die Knacksicherheit wird dadurch wesentlich erhöht. Bevorzugte Einsatzgebiete sind verschlüsselte Datenübertragung in Päketvermittlungssystemen und verschlüsselte Abspeicherung von Daten auf Datenträgern.

EP 0 384 478 A2

Fig. 3

## Verfahren zum Ver- und Entschlüsseln eines Nachrichtenstromes

Die Erfindung bezieht sich auf ein Verfahren zum Ver- bzw. Entschlüsseln eines Nachrichtenstromes gemäß Oberbegriff des Ansprüches 1 bzw. 2.

Solche Verfahren sind bekannt, beispielsweise durch die europäische Patentschrift 22 069.

Bei der Verschlüsselung von zu übertragenden Nachrichten ist die Abhörsicherheit bzw. die Widerstandsfähigkeit gegen Knackversuche des verwendeten Codes von allergrößter Bedeutung. Die Wahrscheinlichkeit, einen Schlüsselcode zu knacken, ist um so kleiner, je weniger Ansatzpunkte dem nicht autorisierten Empfänger in die Hände gelegt werden. Einer dieser Ansatzpunkte ist zum Beispiel, wenn bei der Verschlüsselung zweier Datenblöcke, die sich nur geringfügig unterscheiden, ebenfalls sich nur geringfügig unterscheidendes Kryptogramm (Chiffrat) ergibt. Der vorliegenden Erfindung liegt die Aufgabe zugrunde, ein Verfahren der eingangs genannten Art anzugeben, das es ermöglicht, die Wahrscheinlichkeit für das Knacken des verwendeten Schlüsselcodes weiter zu reduzieren, wobei der dafür notwendige Aufwand relativ gering sein soll.

Diese Aufgabe wurde mit den Merkmalen des Patentanspruches 1 bzw. 2 gelöst.

Vorteilhafte Ausgestaltungen ergeben sich durch die Unteransprüche.

Die Vorteile des erfindungsgemäßen Verfahrens liegen darin, daß die Wahrscheinlichkeit für das Knacken des Schlüsselcodes um einen weiteren großen Faktor reduziert ist, wobei der hierfür notwendige Aufwand relativ gering ist. Insbesondere werden zwei Blöcke, die sich geringfügig, beispielsweise im Extremfall um nur 1 Bit unterscheiden, in ein total unterschiedliches Chiffrat umgesetzt. Weiterhin hat das erfindungsgemäße Verfahren die vorteilhaften Eigenschaften, daß sich die Datenstruktur durch die Verschlüsselung nicht ändert, d.h. daß die Blocklänge sich durch die Verschlüsselung nicht ändert, und daß durch die Verschlüsselung auch keinerlei Notwendigkeit entsteht, zusätzliche Daten zu den verschlüsselten Daten zu übertragen oder zu speichern wie z.B. Synchronisierinformation "initializing vectors", Spruchschlüssel und ähnliche. Weiterhin erlaubt das erfindungsgemäße Verfahren, daß die Blocklänge beliebig sein darf. Dadurch, daß das erfindungsgemäße Verfahren bei der Verschlüsselung zweier beliebig verschiedener aber nicht identischer Klartextblöcke zwei völlig verschiedene Kryptogramme erzeugt, erlaubt das Verfahren eine Blockverschlüsselung über den gesamten, beliebig langen Datenblock, d.h. eine Zerlegung in Unterblöcke entfällt.

Das erfindungsgemäße Verfahren erlaubt außerdem den Einsatz erprobter, bewährter und als sicher geltender Chiffrieralgorithmen. Die Länge des verwendeten Grundschlüssels kann konstant und unabhängig von der Länge des zu verschlüsselnden Datenblocks sein.

Weiterhin erlaubt das erfindungsgemäße Verfahren sowohl eine Verschlüsselung, die unabhängig von den einzelnen Datenblöcken erfolgt, d. h. daß die Ver- bzw. Entschlüsselung eines Datenblockes nur vom eingegebenen Grundschlüssel, nicht aber von der Vorgeschichte abhängig ist, als auch eine Verschlüsselung, bei der eine Verkettung erfolgt, wobei zwei aufeinanderfolgende identische Klardatenblöcke unterschiedlich verschlüsselt werden.

Es folgt nun eine Beschreibung der Erfindung anhand der Figuren.

Die Figur 1 zeigt das allgemeine Blockschaltbild eines Schlüsselgenerators zum Einsatz in dem erfindungsgemäßen Schlüsselverfahren.

Die Figur 2 zeigt ein detailorientes Blockschaltbild für eine mögliche Realisierungsform eines Schlüsselgenerators.

Die Figuren 3 und 4 zeigen eine Schaltungsanordnung zur Durchführung des erfindungsgemäßen Verfahrens, wobei die Figur 3 die Verschlüsselung und die Figur 4 die Entschlüsselung darstellen.

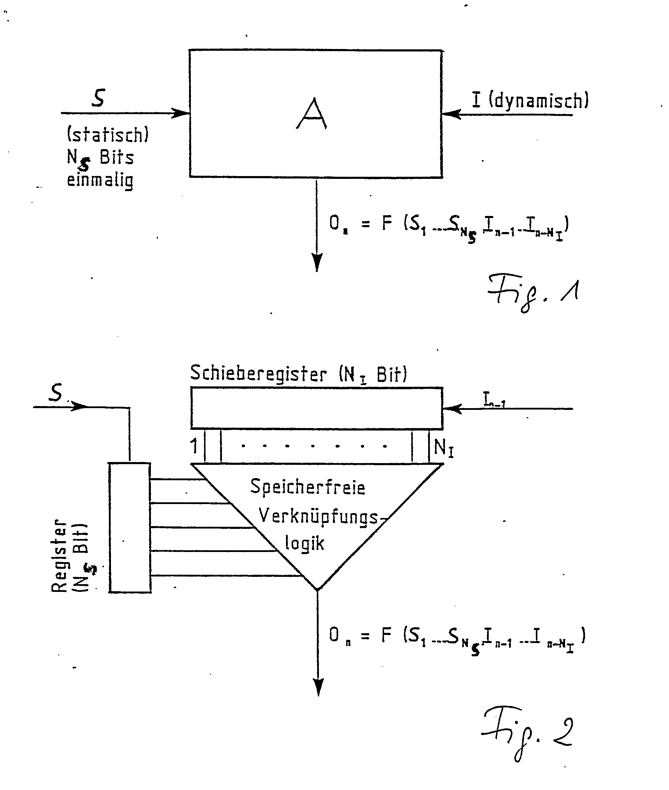

In Figur 1 wird der eigentliche Schlüsselkern als ein schwarzer Kasten (Black-Box) A definiert, der in der Grundausführung zwei Eingänge und einen Ausgang aufweist. In den Eingang S wird vor Beginn der ersten verschlüsselten Übertragung der Schlüssel S bestehend aus $N_S$ Bits eingegeben. Der Schlüssel S ist statisch, d.h. er wird während der verschlüsselten Übertragung nicht verändert. In den Eingang I werden während des Schlüsselvorganges laufend Bits eingegeben und zwar für jedes zu verschlüsselnde Bit genau 1 Bit. Am Ausgang O werden Bits einer Schlüsselbitfolge seriell ausgegeben und zwar jeweils genau 1 Bit für jedes in den Eingang I geschobene Bit. Dabei ist jedes dem Ausgang O entnommene Schlüsselbit eine Funktion des Schlüssels S und der letzten $N_I$ dem Eingang I zugeführten Bits:

$$O_n = F \cdot (S_1, S_2, \ldots S_{N_S}, I_{n-1}, I_{n-2}, I_{n-3} \ldots I_{n-N_I}).$$

Die Funktion F selbst ist durch den jeweils eingesetzten Algorithmus bestimmt und braucht dem Anwender nicht bekannt zu sein.

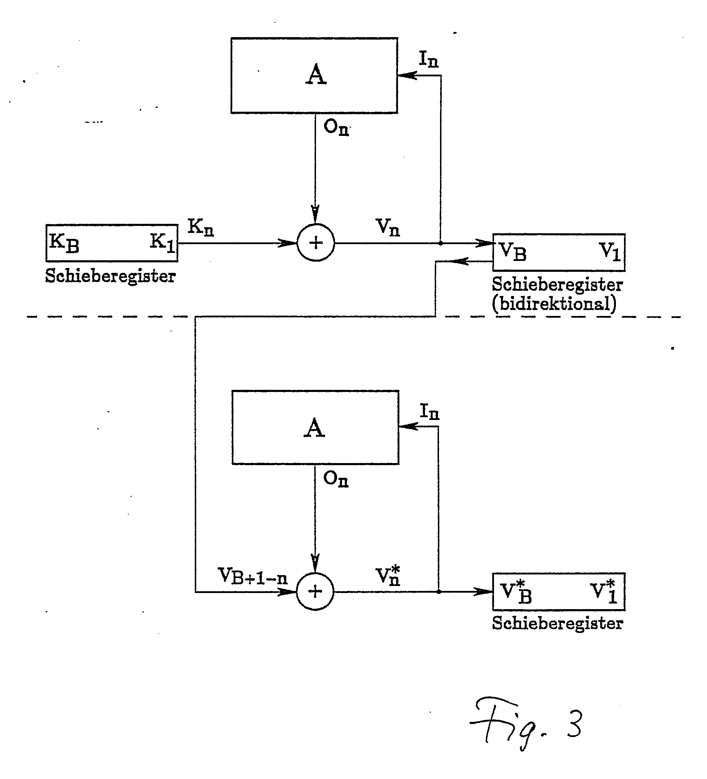

Eine mögliche Realisierungsform des Schlüsselgenerators zur Ausführung des Algorithmus zeigt die Figur 2. Die Anordnung besteht aus zwei Schieberegistern mit seriellen Eingängen und parallelen Ausgängen sowie aus einer speicherfreien Verknüpfungslogik, die sich im allgemeinsten Falle als ROM-Speicher mit $N_S + N_l$ Adresseingängen darstellen läßt. Die Speicherkapazität wäre somit $2^{(N_S + N_l)}$ Bit, welche beispielsweise bei $N_S + N_l = 128$ praktisch nicht realisierbar wäre. Fig. 2 ist also nur als Modellvorstellung zur Verdeutlichung der Funktion des Schlüsselgenerators zu betrachten. Das erste Schieberegister wird einmalig mit $N_S$ Schlüsselbits geladen und dann nicht mehr verändert. Seine $N_S$ Ausgänge sind mit $N_S$ Eingängen der Verknüpfungslogik verbunden. In den Eingang des zweiten Schieberegisters werden während der Ver- bzw. Entschlüsselung laufend Bits aus einer extern erzeugten oder abgegriffenen Bitfolge geschoben, die $N_l$ Ausgänge sind mit den $N_l$ weiteren Eingängen der Verknüpfungslogik verbunden. Am Ausgang O der logik kann für jedes in den Eingang I geschobene Bit ein Bit der Verschlüsselungsbitfolge abgegriffen werden. Der innere Aufbau der Verknüpfungslogik bestimmt die Eigenschaften und die kryptologische Qualität des Algorithmus. Zur Realisierung eines derartigen Algorithmus kann beispielsweise der DES (Data Encryption Standard) im "1-Bit-cipher-feedback-mode" verwendet werden.

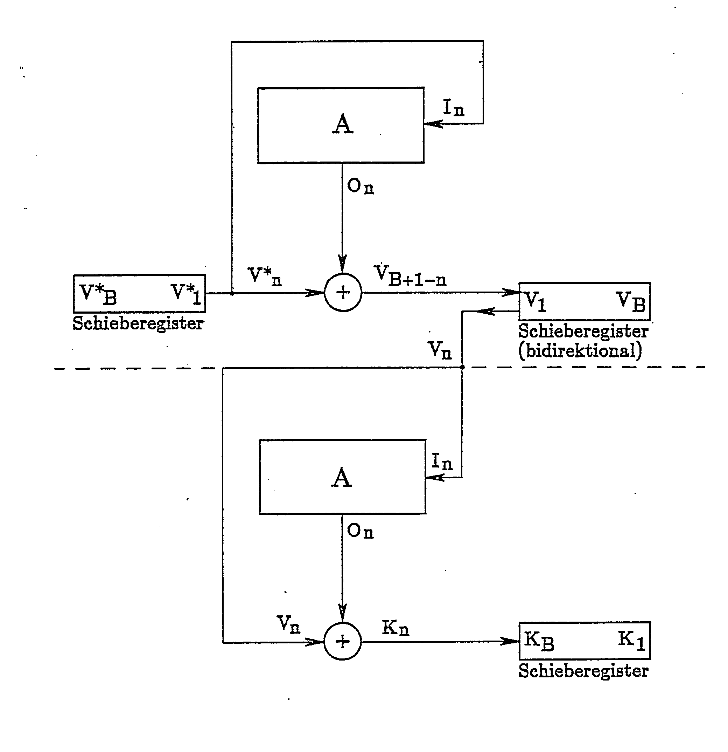

Die Verschlüsselung eines Datenblocks verläuft nun in folgenden Schritten ab, welche anhand der Figur 3 näher erläutert werden. Es sei vorausgesetzt, daß der Schlüssel S bereits vor dem Verschlüsselungsvorgang in den Schlüsselgenerator A geladen wurde. Der Schlüsselgenerator A wird entweder durch einen Rücksetzimpuls oder durch Zuführen von mindestens $N_l$ fest definierten, also jedesmal gleichen Bits in den Eingang I in einen definierten Zustand gebracht. Die Bits des unverschlüsselten Datenblocks werden der Reihe nach dem einen Eingang eines Modulo-2-Addierers zugeführt, dessen anderem Eingang das Ausgangsbit O des Algorithmus A zugeführt wird. Der Ausgang V des Modulo-2-Addierers ist jeweils ein Bit des verschlüsselten Datenblocks, das einerseits abgespeichert und andererseits wiederum dem Eingang I des Schlüsselgenerators (Algorithmus) A zugeführt wird. Bezeichnet man die Bitlänge des zu verschlüsselnden Datenblocks mit B und das n. Bit des zu verschlüsselnden Datenblocks mit $K_n$, so ergibt sich die folgende formale Schreibweise $V_n = K_n + O_n$ und $I_n = V_n$ für $n = 1$ bis B, wobei + eine Addition der beiden Bits modulo 2 bedeutet. Anschließend wird der Schlüsselgenerator A wieder in seinen definierten Anfangszustand gebracht. Danach erfolgt der beschriebene·Schlüsselvorgang für den bereits einmal verschlüsselten Datenblock nocheinmal, jedoch in umgekehrter Reihenfolge der Bits, d.h. das vorher letzte Bit läuft nun als das erste und umgekehrt ein. In formaler Schreibweise ergibt sich damit
$V_n^* = V_{B + 1 -n} + O_n$ und $I_n = V_n^*$ für $n = 1$ bis B.
Der endverschlüsselte Datenblock ist $V_1^*$ ... $V_B^*$.

Die Wirkungsweise des erfindungsgemäßen Verfahrens läßt sich sehr anschaulich an der Verschlüsselung zweier Datenblöcke K erklären, welche sich nur in einem Bit voneinander unterscheiden. Die nach dem ersten Durchlauf entstandenen verschlüsselten Datenblöcke V werden gleich sein bis zu der Stelle des unterschiedlichen Bits, um dann bis zum Ende verschieden zu sein. Nach dem zweiten Durchlauf, bei dem an dem anderen Ende des Blocks angefangen wird, werden somit beide verschlüsselte Datenblöcke bis zum Anfang, also komplett verschieden sein.

Zur Entschlüsselung eines so verschlüsselten Datenblocks müssen die Vorgänge der Verschlüsselung in umgekehrter Reihenfolge durchgeführt werden; dies wird illustriert anhand der Figur 4. Es wird wieder vorausgesetzt, daß der Schlüssel S bereits vor dem Entschlüsselungsvorgang in den Schlüsselgenerator A geladen wurde. Daß der Schlüsselgenerator in einen definierten Anfangszustand gebracht werden muß, sei selbstverständliche Voraussetzung. Die zu entschlüsselnden Bits $V_n^* = V_1^*$ ... $V_B^*$ werden dem einen Eingang des Modulo-2-Addierers und auch dem Eingang I des Schlüsselgenerators A zugeführt. In dem Modulo-2-Addierer findet die Verknüpfung mit den an seinem anderen Eingang anstehenden Bits $O_n$ des Schlüsselgenerators statt. Am Ausgang entstehen die halbentschlüsselten Bits $V_{B + 1 -n}'$ welche in ein Schieberegister zwischengespeichert werden. Mit formaler Schreibweise ergibt sich also
$V_{B + 1 -n} = V_n^* + O_n$ und $I_n = V_n^*$ für $n = 1$ bis B.
Anschließend wird der Schlüsselgenerator A entweder durch einen Rücksetzimpuls oder durch Zuführen der fest definierten Bits in seinen Eingang E in den definierten Zustand gebracht. Danach werden die halbentschlüsselten Bits in umgekehrter Reihenfolge aus dem Schieberegister ausgelesen und zwar einerseits in den Eingang I des Schlüsselgenerators A und zum andern in den einen Eingang des Modulo-2-Addierers, wo wiederum die Verknüpfung mit den vom Schlüsselgenerator gelieferten Bits $O_n$ vollzogen wird. Am Ausgang des Modulo-2-Addierers entsteht dann die Klarbitfolge $K_n$, welche beispielsweise in ein Schieberegister eingeschrieben wird. Mit formaler Schreibweise werden also folgende Gleichungen umgesetzt.
$K_n = K_1$ ... $K_B = V_n + O_n$ und $I_n = V_n$ für $n = 1$ bis B.

Selbstverständlich können mit dem beschriebenen Verfahren die einzelnen Datenblöcke unabhängig voneinander oder aber auch mit Verkettung verschlüsselt werden. Wenn der Schlüsselgenerator A in Abhängigkeit von bestimmten Bits des jeweils vorangegangenen Datenblocks voreingestellt wird, so erhält man eine kryptologische Verkettung der Datenblöcke.

Das erfindungsgemäße Verfahren kann bevorzugt eingesetzt werden

1. bei verschlüsselter Datenübertragung in Paketvermittlungssystemen (sowohl virtuelle Verbindungen als auch Datagramme) und

2. bei der verschlüsselten Abspeicherung von Daten auf Datenträgern, insbesondere solchen mit wahlfreiem blockweisem Zugriff mit gleich oder unterschiedlich großen Datenblöcken.


**Ansprüche**

1. Verfahren zum Verschlüsseln eines in Blökke unterteilten Nachrichtenstromes mit einem Schlüsselgenerator, dadurch gekennzeichnet,

daß jeder Block des Nachrichtenstromes zweimal blockweise verschlüsselt wird,

daß vor jeder dieser blockweisen Verschlüsselungen der Schlüsselgenerator (A) auf einen fest definierten Anfangszustand gebracht wird,

daß in einer ersten blockweisen Verschlüsselung die Bits ($K_n = K_1 ... K_B$) des unverschlüsselten Datenblocks der Reihe nach mit den vom Schlüsselgenerator (A) erzeugten Bits ($O_n$) verknüpft werden und einerseits zwischengespeichert ($V_n = V_1 ... V_b$) und andererseits auf den Eingang ($I_n$) des Schlüsselgenerators (A) zurückgeführt werden,

daß nach der ersten Verschlüsselung des letzten Blockbits ($K_B$) die so verschlüsselten Blockbits ($V_n = V_1 ... V_B$) in einer zweiten blockweisen Verschlüsselung in umgekehrter Reihenfolge ($V_B ... V_1$) wiederum mit den vom Verschlüsselungsgenerator (A) erzeugten Bits ($O_n$) verknüpft werden und einerseits dem Senderausgang ($V_n^* = V_1^* ... V_B^*$) zugeführt und andererseits wiederum auf den Eingang ($I_n$) des Schlüsselgenerators (A) zurückgeführt werden.

2. Verfahren zum Entschlüsseln eines gemäß Verfahren nach Anspruch 1 verschlüsselten Nachrichtenstromes, mit einem Schlüsselgenerator (A), dadurch gekennzeichnet,

daß jeder Block zwei Mal blockweise entschlüsselt wird,

daß vor jeder dieser blockweisen Entschlüsselungen der Schlüsselgenerator (A) auf einen fest definierten Anfangszustand gebracht wird,

daß in einer ersten Entschlüsselung die Bits ($V_n^* = V_B^* ... V_1^*$) des empfangenen Datenblocks einerseits dem Eingang ($I_n$) des Schlüsselgenerators zugeführt und andererseits mit den vom Schlüsselgenerator (A) erzeugten Bits ($O_n$) verknüpft und zwischengespeichert ($V_{B+1-n} = V_B ... V_1$) werden,

daß die so halbentschlüsselten Blockbits in einer zweiten Entschlüsselung in umgekehrter Reihenfolge ($V_1 ... V_B$) einerseits dem Eingang ($I_n$) des Schlüsselgenerators (A) zugeführt und andererseits mit den von dem Schlüsselgenerator (A) erzeugten Bits ($O_n$) zu den Klarinformationsbits ($K_n = K_1 ...$

$K_B$) verknüpft werden.

3. Verfahren nach Anspruch 1 oder 2, dadurch gekennzeichnet, daß die Verknüpfung mittels eines Modulo-Zwei-Addierers oder eines Ausschließenden ODER-Gatters erfolgt.

4. Verfahren nach einem der vorhergehenden Ansprüche, dadurch gekennzeichnet, daß die Zwischenspeicherung in einem bidirektionalen Schieberegister erfolgt.

5. Verfahren nach einem der vorhergehenden Ansprüche, dadurch gekennzeichnet, daß die Zwischenspeicherung in einem RAM erfolgt.

6. Verfahren nach einem der vorhergehenden Ansprüche, gekennzeichnet durch die Anwendung bei Paketvermittlungssystemen.

7. Verfahren nach einem der Ansprüche 1 bis 4, gekennzeichnet durch die Anwendung bei verschlüsselter Abspeicherung von Daten auf Datenträgern.

S
(statisch)
$N_S$ Bits
einmalig

A

I (dynamisch)

$O_n = F(S_1 ... S_{N_S} I_{n-1} . I_{n-N_I})$

Fig. 1

Schieberegister ($N_I$ Bit)

S

$I_{n-1}$

1 . . . . . . . . $N_I$

Register ($N_S$ Bit)

Speicherfreie Verknüpfungs-logik

$O_n = F(S_1 ... S_{N_S} I_{n-1} ... I_{n-N_I})$

Fig. 2

BK 88/29

Fig. 3

BK 88/29

Fig. 4

BK 88/29